# EUROPEAN PATENT APPLICATION

(11) **EP 4 596 372 A1**
(43) Date of publication of application: **06.08.2025**
(21) Application number: 24154917.9
(22) Date of filing: 31.01.2024
(51) Int. Cl.: B62D 21/09, B62D 33/077

(54) **SUBFRAME FOR VEHICLE, AND VEHICLE**

(71) Applicant: SSAB Technology AB, 101 21 Stockholm (SE)
(72) Inventor: Andersson, Helena, 614 97 Söderköping (SE)
(74) Representative: Papula Oy

(57) **Abstract**

A subframe (100) for a vehicle and a vehicle. The subframe comprises two longitudinal beams (1a, 1b) arranged in the lengthwise direction (X) of the vehicle, a front X-cross arrangement (2) and a rear X-cross arrangement (3). Said X-cross arrangements (2, 3) are arranged between the two longitudinal beams (1a, 1b). Each of the front and rear X-cross arrangements (2, 3) comprises connecting members (4f, 4r) arranged crosswise and diagonally in relation to the lengthwise direction (X) for connecting the longitudinal beams (1a, 1b) such that an X-shape is created. The connecting members (4f, 4r) in the front X-cross arrangement (2) are arranged in another angle compared to the connecting members (4f, 4r) in the rear X-cross arrangement (3), such that the front X-cross arrangement (2) is shorter than the rear X-cross arrangement (3) in the lengthwise direction (X).

## Description

### BACKGROUND

The invention relates to a subframe for a vehicle.

The invention further relates to a vehicle comprising the subframe.

Subframes are structural components of trucks, tipper bodies, trailers and similar vehicles or their superstructures. The subframe is a discrete and separate structure within a larger body-on-frame or unit body to carry certain components, such as an engine, a drivetrain, a tipper body, a crane, a flat bed or suspension, for instance. There are still needs for developing subframes to meet varying needs of vehicles using subframes.

### BRIEF DESCRIPTION

Viewed from a first aspect, there can be provided a subframe for a vehicle, comprising two longitudinal beams arranged in the lengthwise direction of the vehicle, a front X-cross arrangement, a rear X-cross arrangement, said front and rear X-cross arrangements arranged between the two longitudinal beams, wherein each of the front and rear X-cross arrangements comprises connecting members arranged crosswise and diagonally in relation to the lengthwise direction for connecting the longitudinal beams such that an X-shape is created, wherein the connecting members in the front X-cross arrangement are arranged in another angle compared to the connecting members in the rear X-cross arrangement, such that the front X-cross arrangement is shorter than the rear X-cross arrangement in the lengthwise direction.

Thereby a subframe where the stiffness is reduced smoothly and gradually over the length thereof, from a rear end to a front end, may be achieved. Furthermore, the subframe may be torsionally stiffer, and stronger for lateral loads. This provides an improved fatigue life across welds of the subframe.

Viewed from a further aspect, there can be provided a vehicle comprising the subframe according the first aspect.

Thereby a vehicle having an improved fatigue life may be achieved.

The subframe and the vehicle are characterised by the independent claims. Further embodiments are characterised in the dependent claims. Inventive embodiments are also disclosed in the specification and drawings of this patent application. Features of the different embodiments of the invention may, within the scope of the basic inventive idea, be applied to other embodiments.

Various embodiments of the first and further aspect may comprise at least one feature from the following paragraphs:
In one embodiment, the length of the front X-cross arrangement is in range of 30 % - 80 % of the length the rear X-cross arrangement.

An advantage is that the structure of the subframe may be optimized in relation to lateral and torsional loads.

In one embodiment, the connecting members of the front X-cross arrangement make a first angle with the lengthwise direction, said first angle being selected in range of 35° to 60°, and wherein the connecting members in the rear X-cross arrangement make a second angle with the lengthwise direction, said second angle being selected in range of 20° to 45°.

An advantage is that the structure of the subframe may be optimized in relation to lateral and torsional loads.

In one embodiment, a junction of the connecting members in the middle of the X-cross arrangement is provided with a plate-like stiffener element at the mid-point of said X-cross arrangement.

An advantage is that the strength of the X-cross arrangement and its ability to distribute stresses may be increased.

In one embodiment, the plate-like stiffener elements are arranged on a top surface and on a lower surface of the connecting members.

An advantage is that the structure of the X-cross arrangement may be effectively stiffened and twisting loads acting on the connecting members and optional transverse support elements may be evenly distributed in the structure of the subframe.

In one embodiment, the subframe comprises a transverse support element arranged perpendicular to the lengthwise direction for connecting the two longitudinal beams, wherein the connecting member is connected to the transverse support element, optionally by a second plate-like stiffener element.

An advantage is that the strength of the subframe in directions transverse to the lengthwise direction may be increased and twisting loads may be evenly distributed in the structure of the subframe.

In one embodiment, the second plate-like stiffener elements are arranged on a top surface and on a lower surface of the connecting member and the transverse support element.

An advantage is that the structure of the X-cross arrangement may be effectively stiffened and twisting loads acting on the connecting members and the transverse support elements may be evenly distributed in the structure of the subframe.

In one embodiment, the front X-cross arrangement is arranged in proximity to the rear X-cross arrangement, wherein rearward positioned connecting members of the front X-cross arrangement are connected to forward positioned connecting members of the rear X-cross arrangement, optionally by a shared stiffener element.

An advantage is that very sturdy structure may be achieved.

In one embodiment, the subframe comprises a lifting safety rod configured to turn on a transversally arranged axle.

An advantage is that a safer repair work or maintenance work under a hopper or another superstructure arranged in its raised position may be achieved.

In one embodiment, the transversally arranged axle of the lifting safety rod is provided in or on a transverse support element, such as a transverse support element arranged between the front X-cross arrangement and the rear X-cross arrangement.

An advantage is that the need for adding additional welds or structures on the subframe may be eliminated.

In one embodiment, the two longitudinal beams are arranged in parallel.

An advantage is that it is easy to attach the subframe to a typically parallelly arranged main frame beams of the vehicle.

Based on the above mentioned, it should be noted that the different embodiments mentioned in the above paragraphs may combined in any possible suitable manner for implementing the present invention.

### BRIEF DESCRIPTION OF FIGURES

Some embodiments illustrating the present disclosure are described in more detail in the attached drawings, in which
Figure 1 is a schematic top view of a subframe for a vehicle,
Figure 2 is a schematic oblique top view of the subframe shown in Figure 1,
Figure 3 is a schematic oblique top view of another subframe,
Figure 4 is a schematic side view of a truck comprising a subframe, and
Figure 5 is a schematic side view of a tipper trailer comprising a subframe.

In the figures, some embodiments are shown simplified for the sake of clarity. Similar parts are marked with the same reference numbers in the figures.

### DETAILED DESCRIPTION

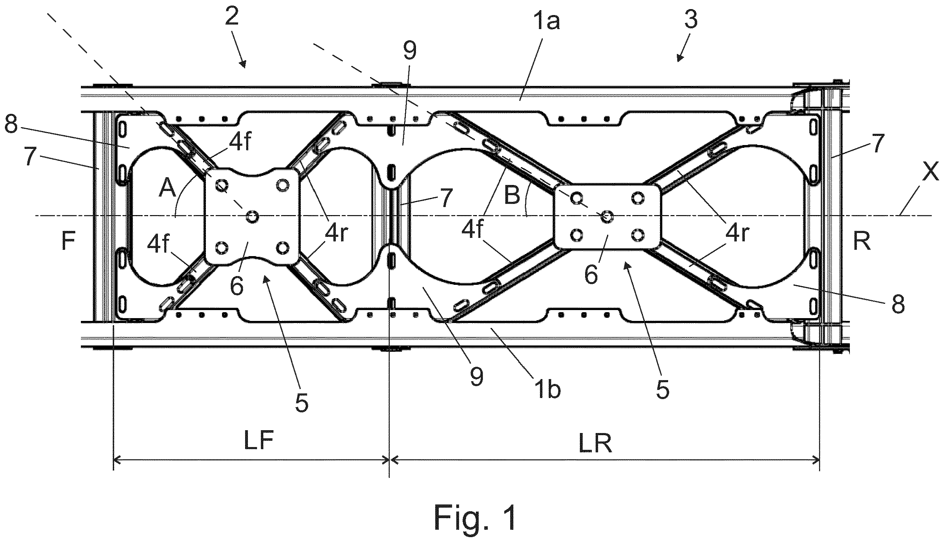

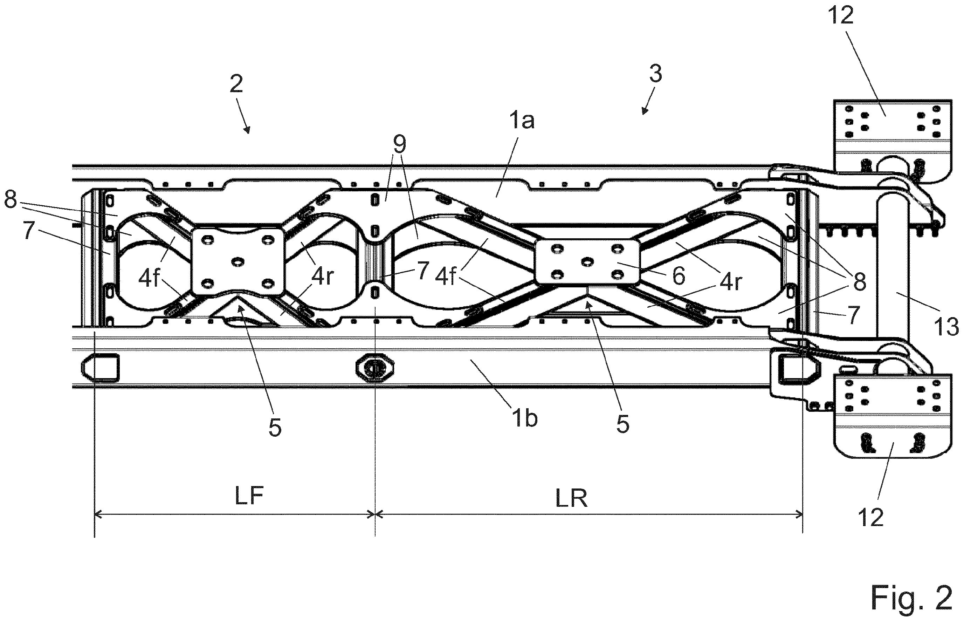

**Figure 1** is a schematic top view of a subframe for a vehicle, and **Figure 2** is a schematic oblique top view of the subframe shown in Figure 1.

The term "subframe" (also called as a helper frame or alternate frame) means a structural component of a truck or trailer, such as truck comprising a hopper, also called as a tipper (truck). The subframe is a discrete, separate structure within a larger body-on-frame or unit body to carry certain components, such as the engine, drivetrain, or suspension. In the tipper trucks the subframe can also be configured to carry the forces generated by the super structure like tippers, bulkers, cargo bodies etc. In some embodiments, such as show in Figure 2, the subframe is provided with pivot brackets 12 and an axle 13 for receiving a hopper.

The subframe is attached to the truck by fastening means, such as bolts or rivets, or by welds.

The subframe 100 has a front end F arranged towards the front end of the vehicle (not shown), and a rear end R arranged towards the rear end of said vehicle. The subframe 100 comprises two longitudinal beams 1a, 1b arranged in the lengthwise direction X of the subframe. Said lengthwise direction X is typically parallel with the lengthwise direction of the vehicle.

In one embodiment, such as shown in Figures 1-2, the two longitudinal beams 1a, 1b, are straight and arranged in parallel. In one embodiment, the longitudinal beam 1a, 1b comprises at least one curve curving in at least one direction perpendicular to the lengthwise direction X of the subframe. In one embodiment, the longitudinal beams 1a, 1b are tapering towards each other so that the width of the front end F differs from the width of the rear end R.

The subframe 100 comprises a front X-cross arrangement 2 and a rear X-cross arrangement 3 arranged between the two longitudinal beams 1a, 1b. Both the front X-cross arrangement 2 and the rear X-cross arrangement 3 comprises connecting members 4f, 4r arranged crosswise and diagonally in relation to the lengthwise direction X of the subframe and connecting the longitudinal beams 1a, 1b such that an X-shape is created in the X-cross arrangement. The connecting members 4f, 4r in the front X-cross arrangement 2 are arranged in another angle compared to the connecting members 4f, 4r in the rear X-cross arrangement 3, so that the front X-cross arrangement 2 is shorter than the rear X-cross arrangement 3 in the lengthwise direction X of the subframe. In other words, a first angle A shown in Figure 1 is greater than a second angle B. The first angle A is the angle between the lengthwise direction X and the centre line of the connecting member of the front X-cross arrangement 2. The second angle B is the angle between the lengthwise direction X and the centre line of the connecting member of the rear X-cross arrangement 3.

In one embodiment, the length L1 of the front X-cross arrangement is in range of 30 % - 80 % of the length L2 the rear X-cross arrangement. The relation of the first and the second lengths L1, L2 is selected on the strength of the type of the vehicle and the position of its suspension components, for instance. According to an aspect, the relative lengths L1, L2 of the cross members may be dependent on position of a centre position of a bogie or a rear axle in a main chassis of the vehicle and/or a suspension travel of the vehicle.

In one embodiment, the first angle A, i.e., the angle of the connecting members 4f, 4r in the front X-cross arrangement 2, is selected in range of 35 ° to 60 °, whereas the second angle B is selected in range of 20 ° to 45 ° such that it is smaller than the first angle.

In one embodiment, the connecting members 4f, 4r meet at a junction 5 in the middle of the corresponding X-cross arrangement 2, 3. In one embodiment, the junction 5 is provided with a plate-like stiffener element 6 at the midpoint of said X-cross arrangement.

In one embodiment, such as shown in the Figures, the plate-like stiffener element 6 has a rectangular-like shape, the corners of which are on the centre line of the corresponding connecting member. It is to be noted, however, that other shapes and designs are possible.

In one embodiment, there are plate-like stiffener elements 6 arranged on a top surface and on a lower surface of the connecting members 4f, 4r. The plate-like stiffener element on the top surface may have the same shape and design as the plate-like stiffener element on the lower surface, but this is not always necessary.

In other embodiments the plate-like stiffener element is arranged only on one side of the connecting members, i.e., on the top surface or the lower surface. Still another embodiment, at least one of the X-cross arrangements 2, 3 is devoid of the plate-like stiffener element.

In one embodiment, the subframe 100 comprises at least one transverse support element 7 that is arranged perpendicular to the lengthwise direction X for connecting the two longitudinal beams 1a, 1b. The embodiments shown in the Figures 1-3 comprise three transverse support elements 7. In one embodiment, the transverse support element 7 is also connected to at least one connecting member 4f, 4r, either directly or through a second plate-like stiffener element 8.

In one embodiment, there are second plate-like stiffener elements 8 attached on the top surface and the lower surface of the connecting members 4f, 4r. The second plate-like stiffener element 8 on the top surface may have the same shape and design as the second plate-like stiffener element 8 on the lower surface, but this is not always necessary. In other embodiments the second plate-like stiffener element is arranged only on one side of the connecting members, i.e., on the top surface or the lower surface. Still another embodiment, at least one of the X-cross arrangements 2, 3 is devoid of the second plate-like stiffener element.

In one embodiment, the X-cross arrangements 2, 3 are arranged close to each other, and rearward positioned connecting members 4r of the front X-cross arrangement 2 are connected to forward positioned connecting members 4f of the rear X-cross arrangement 3. In one embodiment, said connection is realized or supported by a shared stiffener element 9. In one embodiment, the shared stiffener element 9 may be arranged on the top surface or on the lower surface, or both the top and the lower surface. In one embodiment, the shared stiffener element 9 is also attached to at least one transverse support element 7.

In another embodiment, there is a substantial gap between the front X-cross arrangement 2 and the rear X-cross arrangement 3.

The structures and elements of the subframe 100 mentioned in this description may be constructed of any suitable material such as steel. The structures and elements may be attached to each other by, e.g., welds or fastening devices, such as bolts or rivets.

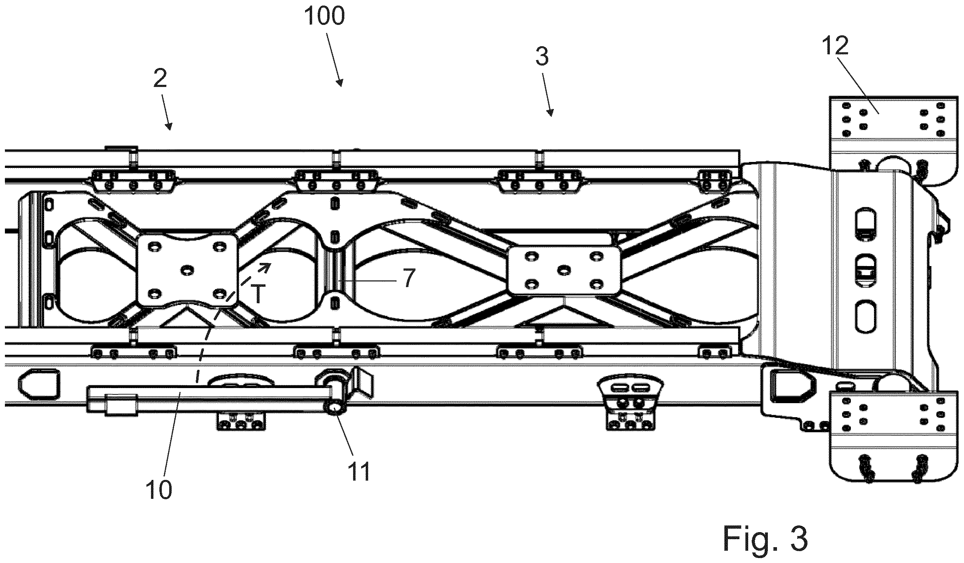

**Figure 3** is a schematic oblique top view of another subframe. In one embodiment, the subframe is provided with a lifting safety rod 10 (also known as a body probe) that is configured to turn T on a transversally arranged axle 11 to a position where it may act as a safety arrangement when a hopper or another superstructure is in a raised position for e.g. repair work or maintenance work. In one embodiment, the transversally arranged axle 11 is arranged inside of the transverse support element 7, such as the transverse support element 7 that is arranged between the front X-cross arrangement 2 and the rear X-cross arrangement 3. In one embodiment, such as shown in Figure 3, there is just one lifting safety rod 10 in the subframe. In another embodiment, there are lifting safety rods on both sides of the subframe, preferably attached to the same transversally arranged axle 11.

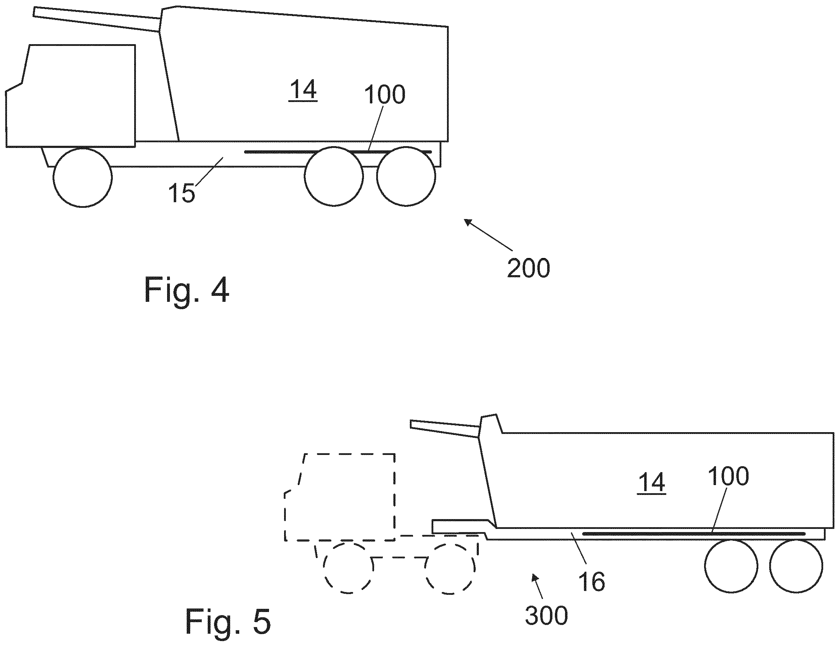

**Figure 4** is a schematic side view of a truck 200 comprising a subframe 100 described in this description. The subframe 100 is attached to a chassis 15 of the truck with, e.g., a motor, a tipping device, and a cabin of said truck.

In one embodiment, the truck 200 comprises a hopper 14.

**Figure 5** is a schematic side view of a trailer 300 comprising a subframe 100 described in this description. The subframe 100 is attached to a trailer chassis 16 that comprises, e.g. a tipping device and a coupling device for coupling the trailer 300 to a tractor unit or truck.

In one embodiment, the trailer 300 comprises a hopper 14.

The invention is not limited solely to the embodiments described above, but instead many variations are possible within the scope of the inventive concept defined by the claims below. Within the scope of the inventive concept the attributes of different embodiments and applications can be used in conjunction with or replace the attributes of another embodiment or application.

The drawings and the related description are only intended to illustrate the idea of the invention. The invention may vary in detail within the scope of the inventive idea defined in the following claims.

### REFERENCE SYMBOLS

- 1a, b: longitudinal beam
- 2: front X-cross arrangement
- 3: rear X-cross arrangement
- 4f, r: connecting member
- 5: junction
- 6: plate-like stiffener element
- 7: transverse support element
- 8: second plate-like stiffener element
- 9: shared stiffener element
- 10: lifting safety rod
- 11: transversally arranged axle
- 12: pivot bracket
- 13: axle
- 14: hopper
- 15: truck chassis
- 16: trailer chassis

- 100: subframe
- 200: truck
- 300: trailer

- A: first angle
- B: second angle
- F: front end
- R: rear end
- L: length
- T: turn
- X: lengthwise direction

## Claims

1. A subframe (100) for a vehicle, comprising
- two longitudinal beams (1a, 1b) arranged in the lengthwise direction (X) of the vehicle,
- a front X-cross arrangement (2),
- a rear X-cross arrangement (3),
- said front and rear X-cross arrangements (2, 3) arranged between the two longitudinal beams (1a, 1b), wherein
- each of the front and rear X-cross arrangements (2, 3) comprises connecting members (4f, 4r) arranged crosswise and diagonally in relation to the lengthwise direction (X) for connecting the longitudinal beams (1a, 1b) such that an X-shape is created, wherein
- the connecting members (4f, 4r) in the front X-cross arrangement (2) are arranged in another angle compared to the connecting members (4f, 4r) in the rear X-cross arrangement (3), such that the front X-cross arrangement (2) is shorter than the rear X-cross arrangement (3) in the lengthwise direction (X).

2. The subframe as claimed in claim 1, wherein
- the length (L1) of the front X-cross arrangement is in range of 30 % - 80 % of the length (L2) the second X-cross arrangement.

3. The subframe as claimed in claim 1 or 2, wherein
- the connecting members (4f, 4r) of the front X-cross arrangement (2) make a first angle (A) with the lengthwise direction (X), said first angle (A) being selected in range of 35° to 60°, and wherein
- the connecting members (4f, 4r) in the rear X-cross arrangement (3) make a second angle (B) with the lengthwise direction (X), said second angle (B) being selected in range of 20° to 45°.

4. The subframe as claimed in any of the preceding claims, wherein
- a junction (5) of the connecting members (4f, 4r) in the middle of the X-cross arrangement (2, 3) is provided with a plate-like stiffener element (6) at the midpoint of said X-cross arrangement.

5. The subframe as claimed in claim 4, wherein
- the plate-like stiffener elements (6) are arranged on a top surface and on a lower surface of the connecting members (4f, 4r).

6. The subframe as claimed in any of the preceding claims, comprising
- a transverse support element (7) arranged perpendicular to the lengthwise direction (X) for connecting the two longitudinal beams (1a, 1b), wherein
- the connecting member (4f, 4r) is connected to the transverse support element (7).

7. The subframe as claimed in claim 6, wherein
- the connecting member (4f, 4r) is connected to the transverse support element (7) by a second plate-like stiffener element (8).

8. The subframe as claimed in claim 7, wherein
- the second plate-like stiffener elements (8) are arranged on a top surface and on a lower surface of the connecting member (4f, 4r) and the transverse support element (7).

9. The subframe as claimed in any of the preceding claims, wherein
- the front X-cross arrangement (2) is arranged in proximity to the rear X-cross arrangement (3), and wherein
- rearward positioned connecting members (4r) of the front X-cross arrangement (2) are connected to forward positioned connecting members (4f) of the rear X-cross arrangement (3) .

10. The subframe as claimed in claim 9, wherein
- said rearward positioned connecting members (4r) and said forward positioned connecting members (4f) are connected by a shared stiffener element (9).

11. The subframe as claimed in any of the preceding claims, comprising
- a lifting safety rod (10) configured to turn on a transversally arranged axle (11).

12. The subframe as claimed in claim 11 and comprising the transverse support element (7) of claim 6, wherein
- the transversally arranged axle (11) is provided in or on said transverse support element (7).

13. The subframe as claimed in claim 12 and comprising the connection of claim 9, wherein
- said transverse support element (7) is arranged between the front X-cross arrangement (2) and the rear X-cross arrangement (3).

14. The subframe as claimed in any of the preceding claims, wherein
- the two longitudinal beams (1a, b) are arranged parallel.

15. A vehicle comprising the subframe as claimed in any of the preceding claims.

16. The vehicle as claimed in claim 15, wherein
- the vehicle is a truck (200), such as a tipper truck.

17. The vehicle as claimed in claim 15, wherein
- the vehicle is a trailer (300), such as a tipper trailer.
